# EUROPEAN PATENT SPECIFICATION

(11) **EP 3 204 974 B1**
(45) Date of publication and mention of the grant of the patent: **07.08.2019**
(21) Application number: 15777679.0
(22) Date of filing: 07.10.2015
(51) Int. Cl.: H01M 8/0206, H01M 8/0254, H01M 8/0267, H01M 8/0271, H01M 8/0282

(54) **ELECTROCHEMICAL SYSTEM WITH A SEPARATOR COMPRISING A BEAD SEAL WITH A REDUCTION OR CLOSURE OF THE COOLANT FLOW CHANNEL IN THE INNER SPACE OF THE BEAD**
ELEKTROCHEMISCHES SYSTEM MIT EINEM SEPARATOR MIT EINER LIPPENDICHTUNG MIT REDUZIERUNG ODER VERSCHLUSS DES KÜHLMITTELDURCHFLUSSKANALS IM INNENRAUM DER LIPPE
SYSTÈME ÉLECTROCHIMIQUE DOTÉ D'UN SÉPARATEUR COMPRENANT UN JOINT D'ÉTANCHÉITÉ À PERLE ISOLANTE AVEC RÉDUCTION OU FERMETURE DU CANAL D'ÉCOULEMENT DE FLUIDE DE REFROIDISSEMENT DANS L'ESPACE INTÉRIEUR DE LA PERLE ISOLANTE

(30) Priority: 08.10.2014 DE 202014008157 U
(43) Date of publication of application: 16.08.2017
(73) Proprietor: Reinz-Dichtungs-GmbH & Co. KG, 89233 Neu-Ulm (DE)
(72) Inventor: GAUGLER, Bernd, 89075 Ulm (DE); WENZEL, Stephan, 89284 Pfaffenhofen (DE)
(74) Representative: Pfenning, Meinig & Partner mbB
(86) International application number: PCT/EP2015/073125
(87) International publication number: WO 2016/055510

(56) References cited:
- EP-A1- 1 791 201
- US-A1- 2009 042 074
- US-A1- 2009 197 147

## Description

The present invention relates to an electrochemical system as well as to a separator plate to be used in such a system.

The electrochemical system may for instance be a fuel cell system, in which electrical energy is generated from hydrogen and oxygen. The electrochemical system may also be an electrochemical compressor system, in particular an electrolyzer, in which in addition to the generation of hydrogen and oxygen from water using an electric potential, these gases are simultaneously compressed under pressure. In addition, electrochemical compressor systems are known, which are supplied with molecular hydrogen and in which this molecular hydrogen is electrochemically compressed by applying an electric potential. This electrochemical compression is particularly suited for small amounts of hydrogen to be compressed, as here, a mechanical compression of the hydrogen would be much more demanding.

Electrochemical systems are known, in which an electrochemical stack of cells is built up with a layering of a plurality of electrochemical cells, which are each separated from each other by separator plates. The separator plates are understood here in such a manner that they comprise two layers. The separator plates have several tasks:
- Electrical contacting of the electrodes of the individual electrochemical cells (e.g. fuel cells) and transfer of the electric current to the adjacent cells (serial connection of the cells).
- Supply of the cells with media, e.g. reaction gases, and removal of reaction products via a channel structure, which is arranged in an electrochemically active area (gas distribution structure / flow field),
- Transfer of the heat produced during the reaction in the electrochemical cell, as well as
- Sealing of the different media- and or cooling compartments against each other and to the outside.

For the media supply and removal from the separator plates to the actual electrochemical cells, these electrochemical cells are for instance membrane-electrode assemblies (abbreviated as MEA) each with gas diffusion layers, e.g. from a metallic or carbon fleece, oriented towards the separator plates, the separator plates may comprise openings for the media supply and removal. In addition, the separator plates usually also comprise openings for the supply and removal of coolant to the interspace between the two layers of the separator plate.

In general, the separator plates can be distinguished into bipolar plates, in which different media are guided on both surfaces and monopolar plates, in which the same medium is guided on both surfaces of a monopolar plate. In most cases, one uses slightly different monopolar plates for the two different media. What is said in the following is valid for both types of plates, except if differences are stressed by an explicit address.

In known separator plates, the gas distribution along the MEA or the gas distribution layer, respectively, is realized using straight channels and/or meandering structures and/or discrete structures on both sides of the separator plate.

It is known, especially in metallic separator plates, to form channel structures into these separator plates or, to be more precise, into their layers and also to form a limiting wall which delimits the electrochemical area during this forming process. The limiting wall here often has a bead-shaped design. It is also known to encircle the aforementioned openings for media and coolant, respectively, with sealing elements; which often have a bead-shaped design, too. EP 1 791 201 A1 discloses a bipolar plate having two parts forming a cooling flow field, wherein lining grooves exhibit floor spaces forming a gap serving as a flow channel for cooling fluid.

In individual cases, it has turned out to be problematic that e.g. coolant on the inner surface of the separator pointing away from the electrochemically active surface of the separator plate, meaning in the interspace between the two layers of a separator plate, is guided on non-desired ways. In extreme cases, one is even faced with a bypass of the coolant, which at least in regions can cause an insufficient cooling of the active area. As a consequence, unexpected temperature peaks or local hot spots may arise as well as non-permitted increase of coolant flow in the coolant guidance. This in turn in cases can have a negative impact on the efficiency of the electrochemical system.

It is therefore the object of the present invention to provide for an electrochemical system as well as a separator plate to be used in this electrochemical system, which allow for an operation with a high efficiency.

This object is solved by the subject-matter of the patent claims.

The invention on the one hand relates to an electrochemical system according to claim 16, consisting in a layering of several cells, which each are separated by separator plates with at least two layers, according to claim 1, where the separator plates comprise beads for delimiting the openings for the supply and removal of coolant to and from the interspace between the two layers of the separator plate or for the supply and removal of reaction media towards and from the cells and/or the separator plates comprise beads for delimiting an electrochemically active area, where for the reduction of flow or avoidance of flow of the coolant in the interspace of the beads, in particular along non-desired ways, the bead itself and/or a structure heading towards the bead at least in sections comprises a reduction of its cross-section and/or a closure of the cross section.

As the bead or a structure heading towards the bead comprises at least one reduction of its cross section or a closure of its cross section, a deliberate guidance of the coolant can be achieved, so that a bypass with a negative impact on the efficiency of the system is avoided. An avoidance of such a bypass-loss therefore allows to operate the electrochemical system with a lower amount of coolant flowing through it. This further means that one can use e.g. smaller pumps for the coolant circulation, thus a smaller electrical consumption is resulting for the revolution of the coolant. The position and number of elements for the reduction of the cross section and/or closure of the cross section are chosen in such a way that the passage of coolant into the bead is only avoided at the position chosen. This ascertains that the hollow space formed by the beads does not need to be completely closed, which means that the bead can deflect essentially without impact in order to provide for an effective sealing function under all operational conditions.

Also, since the structure heading towards the bead in the inner space of the separator plate is arranged opposite to a structure for the limitation or optimization of the media flow in the electrochemically active area on the outer surface of the separator plate, a complete closure is less critical as these structures on the one hand in general have a lower construction height and on the other hand are designed stiffer, so that the entire resiliency of the sealing system of the separator plate is not negatively impacted by the changes in the inner space of the bead.

An advantageous embodiment provides that the head of the bead in at least one of the layers faces to the outside of the separator plate and the reductions of the cross section and/or the closures of the cross sections are arranged in an interspace of the separator plate. The beads here are preferably formed as an integral section of the separator plate.

According to the invention the structures heading towards the bead are arranged in the inner space of the separator plate opposite to bridges and/or limiting elements for the guidance of the flow of reaction media on at least one of the outer surfaces of the separator plate.

These may for instance be structures, as they are disclosed in DE 10 2007 048 184 B3, see there e.g. figures2a, 2b and 5. The individual layers of the separator plates of DE 10 2007 048 184 B3 show a base plane, from which a channel structure protrudes. The individual layers further comprise openings for the supply and removal of media. The channel structure as well as the openings are surrounded by a limiting wall, which may comprise openings for the guidance of media, in particular by a bead-shaped limiting wall. In the area between the limiting wall and the outer edge of the channel structure, on at least one outer surface of the bipolar plate, however preferably on both outer surfaces of the separator plate, at least one limiting element for the avoidance of a bypass of media in the border region between limiting wall and channel structure. With these limiting elements, one thus avoids to a large degree that the medium bypasses the channel structure. This way, a homogeneous media distribution over the channel structure is achieved and thus, the undesired performance fluctuations are excluded. In the electrochemical system of DE 10 2007 048 184 B3, the MEAS show the gas diffusion layers facing the separator plates, too. In this respect, it is preferred that the respective gas diffusion layer does not only cover the channel structure, but that it overlaps at least parts of the limiting elements, too. This causes an additional compression of the gas diffusion layer in this area, which is more pronounced that the compression in the area of the "normal" channel structure. This enhances the avoidance of the bypassing of media in the region in question between the channel structure and the limiting wall.

A further advantageous embodiment provides that a transition region is given from a bead to a structure heading to the bead, where the structure heading towards the bead comprises a forebay/forecourt relative to the bead, and in the area of this forebay, a reduction of the cross-section and/or a closure of the cross section is arranged. Transitions towards the aforementioned limiting elements on the electrochemically active surface often result in the forebay in the inner space of the bead, thus on the backside of the electrochemically active side. The use of such a forebay has the advantage, that an exact positioning of elements or media for the reduction of the cross section or the closure of the cross section can be easily realized.

A further advantageous embodiment provides that the reduction of the cross section or closure of the cross section is achieved by filling and/or by deformation of a section of the separator plate. The deformation can be realized in such a way that the bead in the area of its head comprises a cambering, which reduces the cross section of the bead. This cambering then extends along the chosen section of the bead. It is advantageous if not essential change of the resiliency of the bead relative to the neighboring sections results from this. It is particularly preferred if both beads limiting the inner space of the separator plate are provided with such a deformation, but the deformations in both layers may be to a different degree.

A further advantageous embodiment provides that the reduction of the cross section of the bead or of the structure heading to the bead amounts to at least 30%, preferably at least 60%, particularly preferably at least 90% of the adjacent non-reduced cross-section. This demonstrates that no complete closure of the cross section is required. It is sufficient if the flow resistance in the direction of the undesired bypass is increased to such a degree that no significant bypass of coolant takes place and that instead the intended coolant paths are followed. This partial closure can also be advantageous as it influences the resiliency of the bead less than would be the case with a complete closure, to be more precise with a complete closure with a non-resilient element.

A further advantageous embodiment provides that the reduction of the cross section extends essentially parallel and/or orthogonal to a main plane of the separator plate. Here, in principle, different variants are possible, which depend on the kind of application of the elements and media, respectively, closing or restricting the cross section. In this respect, the influence on the resiliency of the bead can be decisive, too. One can summarize that the closure of the cross section is not essential for the realization of the invention that according to the invention the total flow resistance is increased along non-desired bypasses.

There are several possibilities for the filling. It is for instance possible that the filling is realized in the shape of a plug, where one or several plugs are arranged on the separator plate, in cases in a distributed manner.

As an alternative, the filling can be realized as at least one inserting part, where it is for instance also possible to achieve a closure or a reduction of the cross section simultaneously at several points with only one inserting part.

One possibility is to achieve the filling with a fluid sealant. This is advantageous as it can be realized on a large industrial scale with well-known methods. In this context, it is possible that the fluid filling is realized as a cured in place gasket and/or as a printed structure, in particular applied by screen printing, stencil printing or three-dimensional printing.

In this respect, it is also possible that the fluid itself is self-curing and/or self-foaming.

The curing and/or foaming can be initiated by humidity and/or temperature. The idea behind this is that with a deliberate process sequence, a initially liquid material can be deliberately modified in such a way, that the reduction of cross-section or blocking of the cross section is achieved securely at the position desired. As an example, with a deliberate heating within a process, e.g. to a temperature of 250°C, a curing and/or foaming takes place. This temperature is so high that later on, during the normal operation of the electrochemical system, this temperature will not occur and thus further changes in the properties of the filling is avoided.

It is particularly advantageous that during the later operation of the system, a long-term stability of the filling against temperature changes is given between -40°C and +120°C, as this is for instance the usual temperature range, e.g. for a fuel cell system of a vehicle.

Suitable curing and/or foaming materials are for instance foams from polyurethane, polymers or elastomers which can foam by aid of foaming agents and/or microspheres, e.g. polyethylene, silicone, polystyrene, polyisobutylene, EPDM, fluoro-elastomers and/or PTFE.

It is additionally advantageous that the filling is realized in such a way that it is chemically inert and in particular stable against demineralized water, glycol, fuel cell coolant and/or heat transfer oil. This way it is ascertained that the filling is not deteriorated in its long-term stability by an operation with coolant and/or other media even during several years and that therefore, the reduction of the cross-section or blocking of the cross-section is maintained accordingly.

A further embodiment provides that the material of the filling is as resilient, even after the curing and/or foaming, that the elastic behavior of the bead in the filled area is influenced to a minimum degree only. This on the one hand can be achieved in that the filling is a compressible material. On the other hand, in case of an incomplete filling, it can also be achieved if the filling is deformable.

It is further possible to provide the closure of the cross section or the reduction of the cross section as inserting elements from metal and/or plastics. In this respect, it is also possible that an inserting element from metal on one or both sides comprises erected fins for the reduction of the cross section for the flowing coolant in the bead seal via the inserting element. The advantage of this is that such an element can be produced rapidly and cost-efficiently on a large industrial scale with small tolerances. It is however also possible to provide hybrid parts, e.g. that the inserting element is realized as a metal part with attached or molded-onto plastic sections.

A further advantageous embodiment provides that the inserting element orthogonal to the base area of the separator plate comprises upward and downward chambers. With this, one deliberately achieves a three-dimensional adaptation of the inserting part to the structure of the separator plate.

A further advantageous embodiment provides that the inserting element is e.g. realized tube- or catheter-shaped. With such an embodiment, it is advantageous that due to the remaining hollow space of the inserting element, the spring constant of the inserting element remains low, e.g. when pressing on the shell of a tube, the resiliency will be higher than when pressing on a corresponding dense wire from the same material. The passage is here reduced or avoided because of a partial or complete closure of the inserting element itself.

A further embodiment provides that the inserting element comprises undercut sections which allow the positioning or fastening in hollow areas of the separator plate. With this, it is possible to precisely adapt the inserting element to the separator structure and to achieve a secure location of the inserting element, a defined geometrical relationship during the production and especially during operation.

A further embodiment provides that the filling of the area to be closed is realized in such a way, that it can be distinguished from a metallic material of the separator plate in ultrasonic and/or X-ray measurements. As an alternative or in addition, a thermographic distinction or the like is possible. This way, one can ascertain with a testing procedure that can be used at large industrial scale that the reductions and/or closures of the cross-sections are given at the positions desired and/or only at these positions even if the filling is not visible from the outside of the separator plate.

A further embodiment provides that the bead is realized as a full bead. This bead may for instance have a V-shape or a U-shaped etc.; these are examples for a resilient structure, which can even be provided with a filling, a partial reduction of the cross-section or a partial closure of the cross-section.

A further embodiment provides that the at least two layers of the separator plate are produced from steel, in particular stainless steel, and that they may be provided with a coating in sections or over their entire surface. Under particular circumstance, it is possible to reinforce or thicken the coatings that are anyway applied in particular areas which point towards the inside of the bead, in order to achieve the desired reduction or closure of the cross-section in the sense of the invention.

An example of application at large industrial scale is e.g. that the at least two layers of the separator plate is realized as embossed metal part with integrated bead seal structures, which then is coated in sections or on its entire surface.

One embodiment provides that the openings of the separator plate used for the supply and removal of coolant into the interspace of the at least two plates or for the supply and removal of media are provided with beads. These are one of the main fields of application of the present invention. In the further course, the beads may comprise passages for the passage of liquid and/or gaseous media into a hollow space in the inner space of the separator plate or to the electrochemically active area on the respective outer sides of the separator plate.

In addition, the difference between a bipolar and a monopolar design and therefore between the realization of the separator plates as bipolar plates or monopolar plates shall be explained. In a monopolar system, on both outer surfaces of the electrochemically active area of a first monopolar plate, which in the sequence of plates within an electrochemical system has an odd number, the same first medium is guided, e.g. hydrogen. On both two outer surfaces of the electrochemically active area of a second monopolar plate, which in the sequence of plates within an electrochemical system has an even number, the identical second medium, e.g. air, is guided. Monopolar plates with an even number here advantageously have an identical design; monopolar plates with an odd number advantageously also have an identical design, which is however different from the one of the monopolar plates with even number, differences may also be given with respect to the interspace and the beads. On the contrary, in a bipolar system, the same first medium, e.g. hydrogen, is always guided on the surface of the bipolar plate pointing towards the same end of the stack of plate. However, the second medium, e.g. air, is always guided on the surface of the bipolar plates pointing towards the other end of the stack of plates. As a consequence, it is advantageous if all bipolar plates of a stack or of an electrochemical system, respectively, have the same design.

In addition of the objects described above, which have been described on the example of an electrochemical system, a separator plate to be used in such a system is also an object of the invention. All characteristics described above, which are realized in a separator plate are therefore also part of a separator plate according to the invention.

The present invention is now explained on the example of several drawings, which all relate to a fuel cell system. The analogue is however also true for any sort of electrochemical systems, which are for instance electrochemical compressors and/or electrolyzers. It is shown in
- Figs. 1 to 3:: the construction of an electrochemical system according to the invention on the example of a fuel cell stack;
- Figs. 4a and 4b:: top-views to differently designed bipolar plates (from the outer side, thus the electrochemically active area is visible);
- Figs. 5a and 5b:: Top-views to separator plates according to the invention (from the inside, thus the channels for the guidance of coolant are visible.
- Figs. 6a to 6g:: Beads as well as structures leading to the beads, which preferably are at least partially closed by a filling;
- Figs. 7a to 7d:: inserting elements for the reduction or closure, respectively, of the cross-section;
- Fig. 8:: a cross-section of a bead with a reduction of the cross-section achieved by a deformation of the head of the bead; and
- Fig. 9:: a table providing a comparison of pressure losses and maximum temperatures of different electrochemical systems.

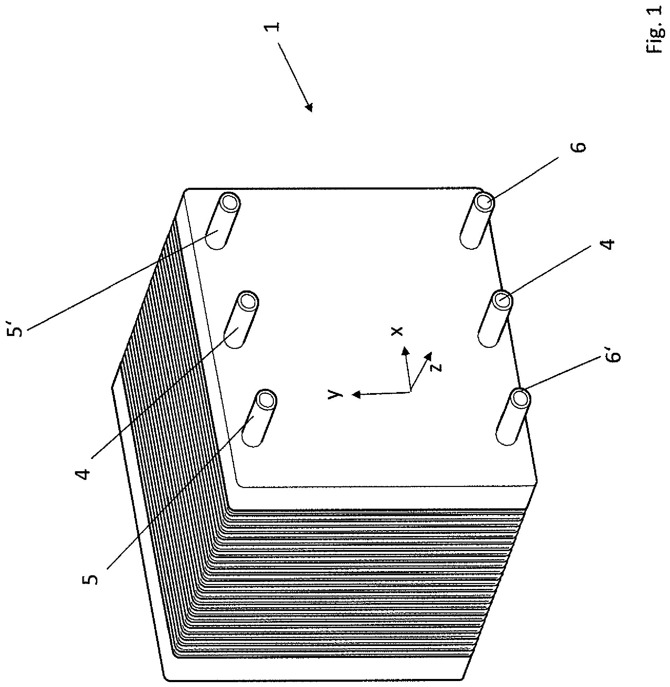

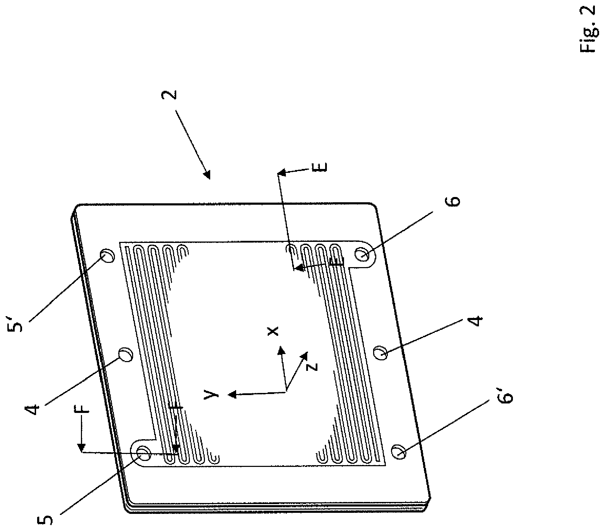

Figures 1 to 3 illustrate the general construction of an electrochemical system realized as a fuel cell stack 1. It comprises a layering of several fuel cell arrangements as shown in figure 2. The layering of this fuel cell arrangement is held by end plates, which provide a pressing tension to the layering of the fuel cell arrangement.

Several media are guided through the fuel cell stack. These are for instance hydrogen (H₂), which is guided through inlet- and outlet ports 5 and 6. It is further e.g. air, which is guided through inlet- and outlet ports 5' and 6', as an alternative, one can also use molecular oxygen (O₂). It is further a coolant, e.g. cooling water, which is guided through inlet- and outlet ports 4.

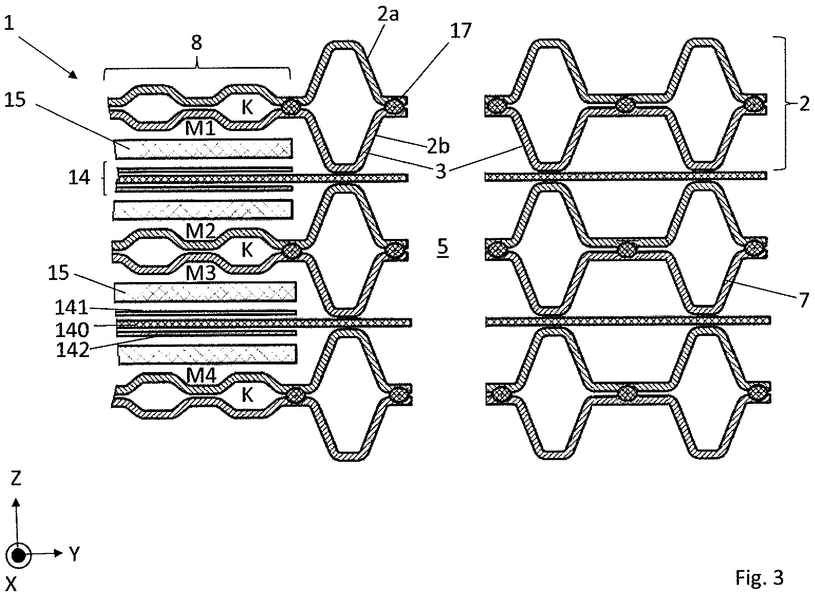

Figures 2 and 3 show details of the inner design of the fuel cell arrangement. Here, figure 2 shows a layer of the fuel cell stack - meaning in the x-y plane - to be more precise a top view to a separator plate 2. A cross-section through the fuel cell stack in the x-z-plane is shown in figure 3.

Here, at least one cell, namely a fuel cell, 14 is given, which comprises a polymer membrane 140 conductive for ions, which at least in an electrochemically active area 8 is provided with a catalyst layer 141, 142 on both sides. Further, several separator plates 2 are shown, between which the fuel cell 14 is arranged. In addition, weldings 17 for the connection of two metallic layers, to be more precise of two embossed metal parts 2a, 2b to a separator plate 2, are shown. In the area between each separator plate and the closest fuel cell, a gas diffusion layer 15 is additionally arranged. Figure 3 shows a cross-section comparable to section F-F in figure 2. Here, a bead 3 encircles an opening 5 for hydrogen and this way delimits this opening 5. A bead 7 extending in the edge area of the separator plate 2 forms a limiting wall, too, and this way provides for a sealing of the electrochemically active area 8, so that no coolant or media can leave this area to the outside or vice versa. This is obvious from section E-E in figure 2, where the electrochemically active area 8 is not separated from the outer edge of the separator plate by a passage opening 5. In the schematic drawings in figures 1 and 2, the beads 3 and 7 are not explicitly shown. As can be better seen in figures 1 and 2, the separator plates in most cases comprise six, in some case also more flush openings, so called interface channels. On the one hand, these are two openings for the passage of coolant, which passage openings are surrounded by an additional bead arrangement, which is not shown here, too. Further, at least two openings 5 and 5' for the supply of media and at least two openings 6 and 6' for the removal of media to or from the electrochemically active area comparable to the opening 5 shown as an example in figure 3 are provided, which are delimited by a further bead arrangement, which is neither explicitly shown. In addition, passage openings for bolts which in figure 1 are not explicitly shown, may be provided.

Using the example of figure 3, the difference between a bipolar and a monopolar design and therefore between a realization of the separator plates as bipolar plates or monopolar plates, respectively, shall be explained. In both cases, coolant is guided in the interspace between the two metallic layers 2a, 2b of a separator plate 2, thus in each case on the back side of the electrochemically active area 8 of the separator plate 2. If M1 and M3 on the one hand are the same first medium, e.g. hydrogen and M2 and M4 on the other hand are the same second medium, e.g. air, then a bipolar construction is given and all bipolar plates 2 show the same design. If, on the contrary, M1 and M4 are the same first medium, e.g. hydrogen and M2 and M3 the same second medium, e.g. air, then a monopolar construction is given. Thus, on both outer surfaces of a monopolar plate 2, the same medium is present. In a monopolar construction, at least all monopolar plates with an odd number in the sequence of plates in a stack on the one hand and all monopolar plates with an even number in the sequence in a stack on the other hand therefore preferably have the same construction among themselves.

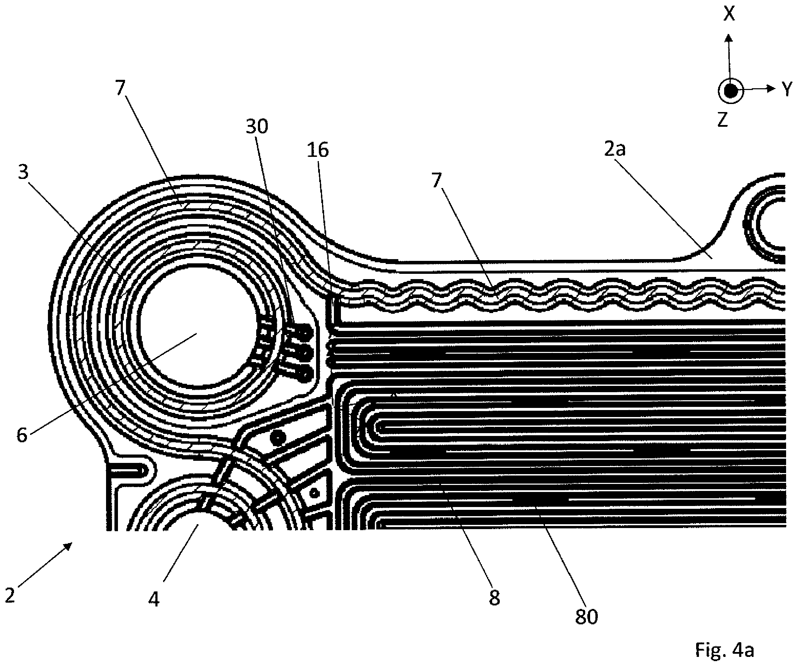

Figure 4a shows a top view to a section of a separator plate as an example. One can see an opening 6 for the supply or removal of a medium, which is surrounded by a circular full bead 3. This full bead or bead arrangement comprises passages 30 for the passage of liquid or gaseous media through a hollow space to the electrochemically active area 8. The separator plate shown is made from metal with the channel structures and the limiting walls being for instance realized as embossments into each of the two layers 2a, 2b of the separator plate, where only the layer 2a being visible.

In figure 4a, for demonstration purposes, only the upper left corner of the separator plate is shown, namely with its outer side, thus with its side on which the guidance of media through the electrochemically active area is realized. The side of the separator plate 2, on which the coolant is guided, or on which the interspace for the coolant forms between the two layers 2a, 2b is formed, will later on be referred to as inner side. The guidance of media through the electrochemically active area 8 is realized in such a way, that the position for the inlet of the medium and the position for the outlet of the medium are situated most remote from each other adjacent to the electrochemically active area, preferably at the face diagonal of the plane, as it is shown in figure 4a. The course of the bead here is shown undulating, but this is to be understood as an example only. Further, with an undulating course of the bead 7, a section of the bead close to the channel structure of the electrochemically active area 8 is connected to the channel structure via a delimiting element 16.

From this, on can also see that the delimiting element 16 extends essentially transverse to the bead 7 and essentially transverse to the elements of the channel structure closest to the bead, thus the outermost elements of the channel structure of the electrochemically active area. One can further see that the bead 7 surrounds the bead 3 in sections towards the outer edge of the separator plate.

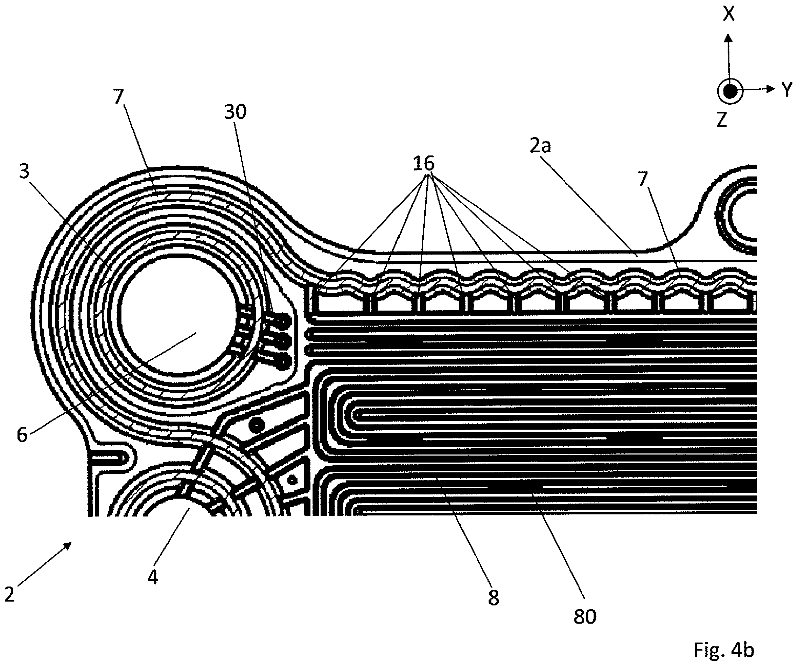

Figure 4b shows an alternative embodiment of a separator plate different from the one shown in figure 4a. In contrast to the separator plate shown in figure 4a, here several delimiting elements 16 are given. They are distanced to each other, so that in each case two adjacent delimiting elements 16 each form chambers between the channel structure of the electrochemically active area 8 and the bead 7. The repeating distance of the individual delimiting elements 16 here is preferably larger than 2 mm, preferably larger than 5 mm, particularly preferably larger than 10 mm. The distance here also corresponds to a wave length of the undulating bead 7.

It is thus obvious that in the figures 4a and 4b, delimiting elements 16 are provided which prevent a bypass of gaseous media on the outer surfaces of the separator plate, thus a flow of the medium past the channel structure between the bead 7 and the outermost elements of the channel structure of the electrochemically active area 8. One should keep in mind that these delimiting elements 16 form transverse bridges, thus they are not realized as supply beads for the media channels. Their cross-section is bead-shaped, but shows a smaller height than the beads 3, 7.

This way, the flow of medium on the upper side of the bipolar plate, thus in the electrochemically active area 8, which for instance starts at the opening 5 for the supply of medium, through the meandering channel structure of the electrochemically active area 8 is enforced. In the electrochemical system according to figures 1 to 3 described before with the exemplary separator plate structures of figures 4a and 4b, an excellent separation of the media, e.g. hydrogen and oxygen as well as coolant from each other is possible. It can however be problematic that the coolant channels on the backside of the layers 4a and 4b of the separator plates, thus in the interspace of the separator plates in cases comprise undesired bypasses, in particular as additional hollow spaces are formed due to the structures mentioned beforehand (7,16).

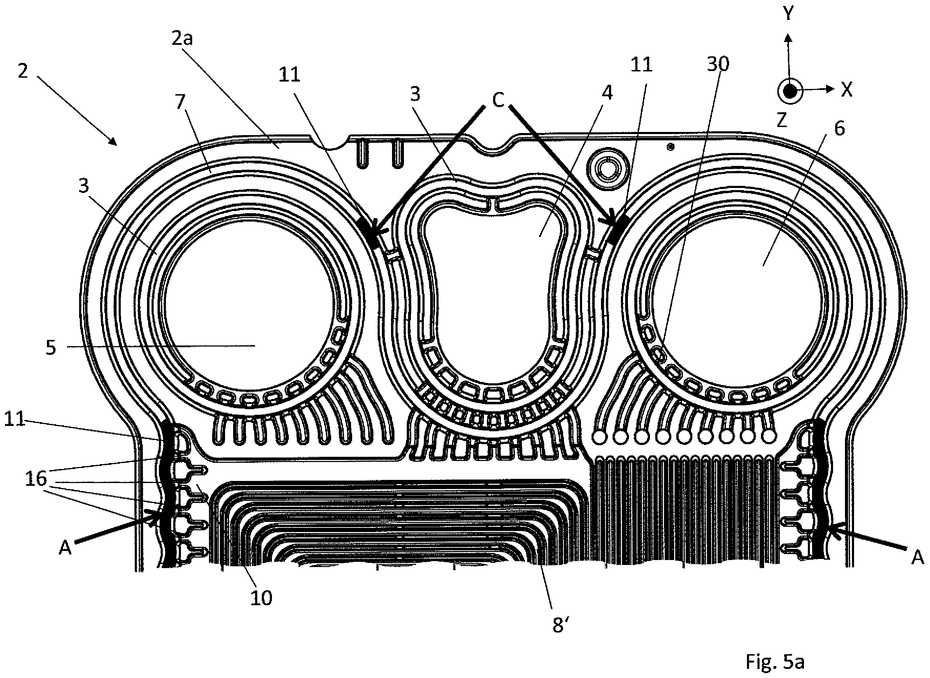

This will be described in the following using figures 5a and the following ones. It shall be mentioned that the geometries of the separator plates shown in figures 5a ff. are different from the ones of the preceding drawings. The exact geometries are only to be understood as examples. What is common to all of them is the basic structure with the medium guidance of air/oxygen and hydrogen, respectively, on the outer sides and the guidance of coolant in the interspace of the separator plate as well as the general guidance of these media.

Figure 5a shows the inner side of a layer 2a of a separator plate 2, thus the inner side of an embossed metal part with an embossed bead and channel structure. The depressions shown in figure 5a are suited for the guidance of a coolant. For the sake of clarity, only one embossed metal part is shown, which in practice is complemented by a further metal part to be placed on the first one to form a separator plate. The two embossed metal parts are connected, e.g. by laser welding, so that an inner hollow space for the guidance of coolant results, as this is for example shown in figure 3, see the welding 17 there.

A basic problem of the separator plates existing till now is, that e.g. coolant supplied through an opening 4 is guided to the channel structure on the backside of the electrochemically active area 8'. This is in generally achieved in that with the opening 4 surrounded by a bead, the bead 3 in its flanks comprises openings 30, so that the coolant in the plane of the drawing sheet is guided towards the meandering structure on the backside of the electrochemically active area 8. What is problematic with this is that the coolant can also get into the surrounding bead 7, which is arranged around the electrochemically active area through passages 30 as well as delimiting elements 16 and thus flows past the area to be cooled.

In order to prevent this problem according to the invention, one therefore provides a filling 11 for the reduction and closure, respectively, of the cross section of the bead 7 on the backside or inner side, respectively, thus in the interspace between the two layers 2a, 2b of the separator plate 2, in order to avoid bypasses of the coolant. Here, in figure 5a, two possibilities for the filling are indicated with capital letters A and C. This on the one hand is a partial filling 11 of the bead 7 in the area A of the delimiting elements 16 and on the other hand a filling of the bead 7 in two areas C in the area surrounding the opening 4. With such elements for the reduction of the cross section or for the closure of the cross section, one achieves that the coolant is forced to flow in the desired manner through the coolant channels in the active area 8'. While here, the fillings 11 in area A are mandatory, as they are situation in areas relative to the total flow direction of the coolant, to which the coolant is desirably directed, the fillings 11 in the areas C are optional, as they are situated in areas from which the coolant flows away with respect to the total flow direction of the coolant. The fillings 11 in the areas C can be compared to plugs at the outlet ends of pipes. Without the fillings 11 in the areas C, coolant would just fill the volume of the bead between the areas A and the areas denominated C in the present case without flowing. In contrast, in the case shown, the bead sections affected are empty, which causes a somewhat smaller total weight and which is therefore preferred.

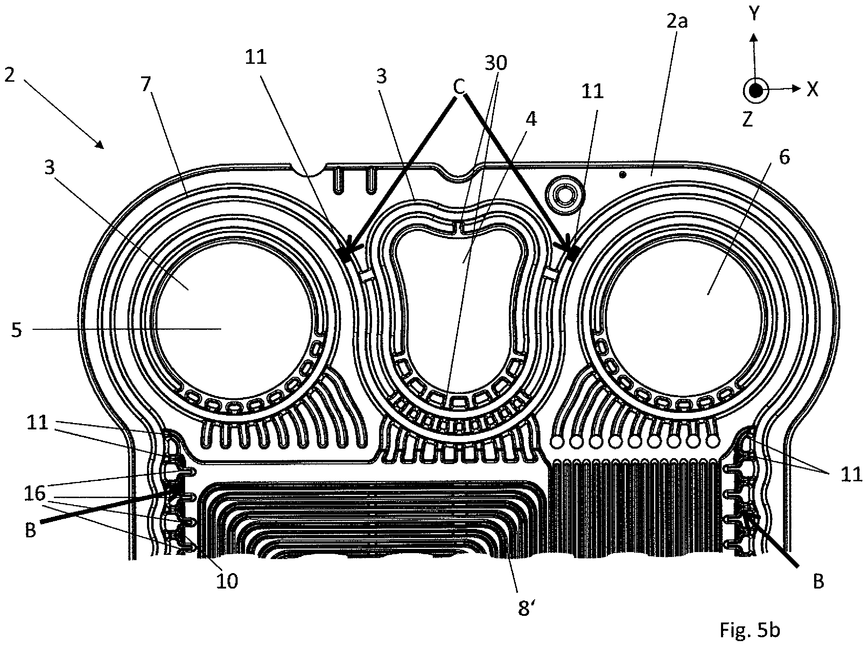

As an alternative, it is also possible as shown in figure 5b, that the structures leading towards the bead, such as the forebays 10 in figure 5b, are closed with a filling 11, see the areas marked there with B. With this, it is advantageous that the resiliency of the bead is even less influenced, as the bead itself is not filled. A comparison of the upper end of the right area B with the upper end of the left area B indicates that the fillings can be connected with each other or be realized independent of each other. In the areas C, which are filled only optionally as before, a filling 11 of the bead 7 is provided for the reduction and/or for the closure of the interspace between the beads 7 of both metallic layers 2a, 2b of the separator plate 2.

In the meaning of the present invention, there are different possibilities in order to fill either the beads or the structures guiding towards or away from the beads partially or completely in its cross section, so that it is no further possible to guide coolant from the areas in the inner space of the separator plate situate opposite to the electrochemically active areas 8 on the outer side of the separator plate 2, to the beads 3, 7 or through the beads 3, 7.

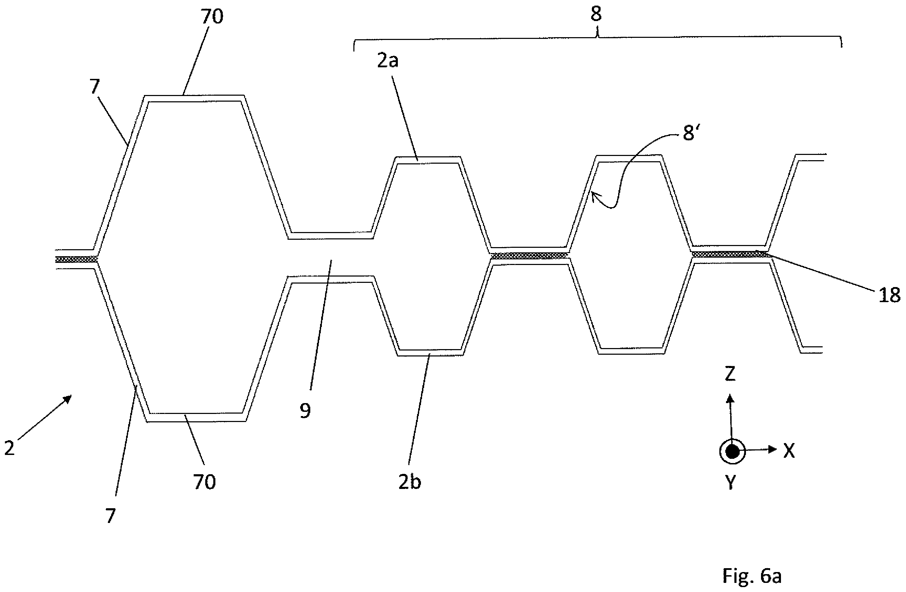

This is general possible as the corresponding hollow spaces or interspaces, respectively, are provided with a filling 11. This can for instance be realized as a fluid sealant or as a solid insert. Examples for this will especially be given with relation to the following figures 6a to 7d.

All these embodiments are thus variations of an electrochemical system 1, consisting in a layering of several cells, which are each separated from each other by separator plates 2 with at least two metallic layers 2a, 2b,. The separator plates in the at least two layers 2a, 2b each comprise beads 3 for the limitation of openings for the cooling 4 or supply and removal of operational media 5, 6 to the cells and/or where the separator plates in the at least two layers 2a, 2b each comprise beads 7 for the limitation of an electrochemically active area 8. For the avoidance or reduction of the flow inside of the beads 3, 7 at least one of these beads itself and/or a structure 9 leading to at least one of these beads at least in sections comprises a reduction of the cross-section and/or a blocking of the cross-section.

The reductions and blockings of the cross-section are preferably arranged on an inner side of the layers 2a, 2b of the separator plate 2, which points away from one of the outer sides of the layers 2a, 2b of the separator plate 2, preferably on both of these inner sides of the layers 2a, 2b of the separator plate 2 and therefore in the interspace of the separator plate 2.

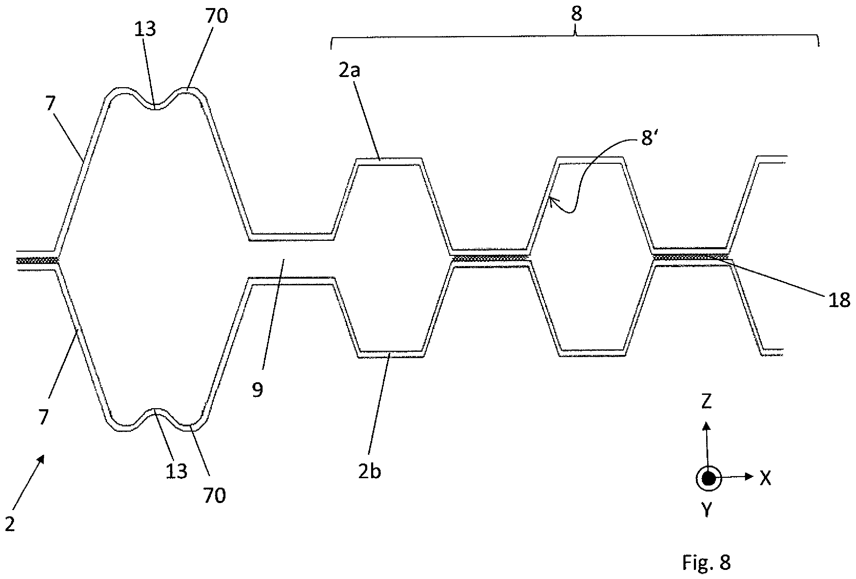

The reduction of the cross-section in a system according to the invention can amount to at least 30 %, preferably 60%, particularly preferably 90% of the adjacent non-reduced cross-section. In the following, examples of the invention which achieve a reduction or blocking of the cross-section by a filling or by an inserting element are shown. As an alternative, it is however also possible to achieve a reduction or blocking of the cross-section extending along the extension direction of the bead by a corresponding partial deformation of a section of the separator plate, as is illustrated in figure 8.

The fillings shown in the following are for instance realized as single or a plurality of plugs if no bridging inserting elements are used. It shall be mentioned that the amount of these reductions/blockings of cross-sections using plugs mainly depends on the desired value of the flow resistance.

All fillings shown in the examples 6b to 6g can for instance be applied by filling with a fluid sealant. In this respect, it is possible to apply the fluid as CIPG (cured-in-place gasket) and/or by printing, in particular by screen printing, stencil printing and/or three-dimensional printing. The fluid sealant here can be curing and/or foaming by itself. When heating to e.g. 200°C for a short time during the production process, one here can achieve a curing or foaming of the fluid sealant applied. As an alternative, this can be achieved by a deliberate humidification, e.g. by the passage of humidified air.

Suited hardening and/or foaming materials are for instance polyurethane foams, polymers or elastomers which can be foamed using foaming agent and/or microspheres, such as polyethylene, silicon, polystyrene, fluoro-elastomers, polybutylene, EPDM and/or PTFE. All these materials are suited as temperature-stable fillings, e.g. in the temperature range required for vehicles of - 40°C to 120°C. For security reasons and with respect to the long-term stability, it is here advantageous, if these fillings can be exposed to a temperature of e.g. 250°C for a short time without destruction. Further, these materials are also stable against demineralized water, glycol, fuel cell coolants and/or heat transmission oils.

It is advantageous if the substances on the one hand fill the desired space permanently and are chemically inert and chemically stable. On the other hand, the density of the filling does not need to be very high. This might lead to disadvantages with respect to weight and compressibility/resiliency, it might also have a negative impact on the spring behavior of the bead 7. It is only important that the flow resistance of the coolant is increased and this can already be achieved with substances of low density.

In particular with fillings, which are first applied as fluids, it is advantageous that they can be distinguished from the metallic material of the remaining separator plate in ultrasound and X-ray measurements. As an alternative, it is also possible to use thermographic methods for this distinction. This way, the presence and/or correct positioning of the filling can be checked for; it also allows to test for the long-term stability.

The invention is generally suited for separator plates and electrochemical systems, respectively, where a coolant circuit needs to be guided particularly efficiently on the inner side of a separator plate. The invention is particularly suited for such electrochemical systems, where the openings of the separator plate for the supply and removal of coolant 4 in the interspace of the at least two layers 2a, 2b of the separator plate or for the supply and removal of media 5, 6 are provided with beads 3, which comprise passages 30 for the passage of liquid or gaseous media into the hollow space of the separator plate 2 or to an electrochemically active area 8, in most cases in the area of the flanks of the beads or as passage through the flanks of the beads. Details relating to these passages can for instance be seen in figures 4a to 5b as well as in the German patents DE 10 2007 048 184 B3 and DE 102 48 531 B3.

For an increase of the efficiency it is possible according to the invention that the separator plates are designed in such a manner that the guidance of media through the electrochemically active area is realized in such a way that the position of the entrance of the medium and the position of the exit of the medium are located at most remote positions of the electrochemically active area. In most cases, the positions located most remote from each other are attributed to the media hydrogen and air, while as a consequence, for the guidance of coolant, somewhat shorter distances have to be chosen.

Figure 6a shows a cavity which results from two embossed metal parts 2a, 2b of a separator plate 2 located one on the other, thus by two inner sides of the two layers 2a, 2b of a separator plate 2 facing each other. They are for instance welded or glued to each other in the area of their connection plane 18, so that a fluid-tight chamber results, which can be filled through openings which are not shown in figure 6a. One can further see an exemplary bead 7 which is schematically shown as well as a structure 9 leading towards the bead.

In the following several variants of a reduction of the cross-section or a blocking of the cross-section, respectively, are shown.

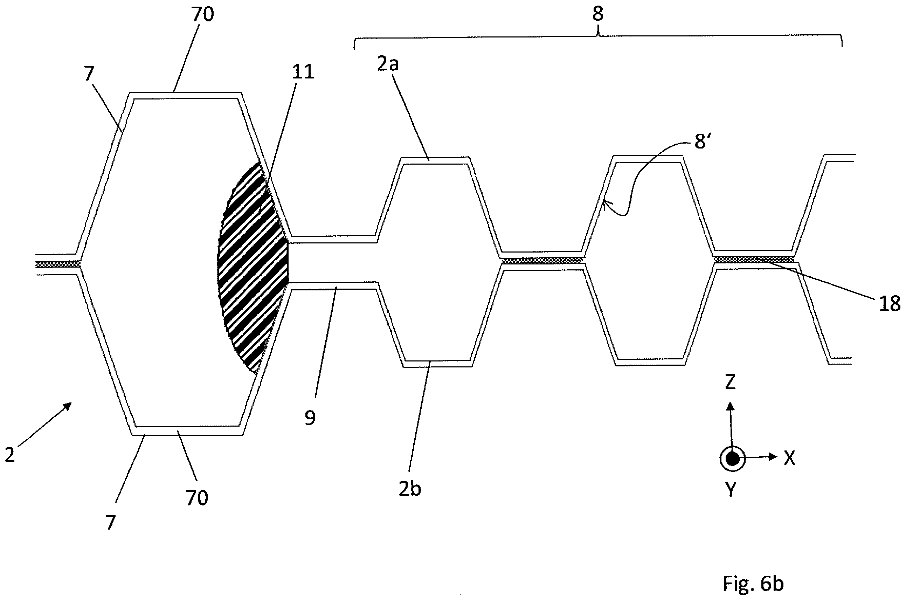

Figure 6b in this context shows a closure of the connection between the structure 9 towards the bead 7. To this end, the cross-section of the bead 7 in areas is closed by a filling 11, namely essentially starting from the central plane (connection plane 18) towards the heads 70 of the bead 7, where the heads 70 are however not reached. This has the advantage that the resiliency of the bead orthogonal to the connection plane 18 in Z-direction of the shown coordinate system is essentially not influenced, in particular if the filling 11 is elastic or deformable.

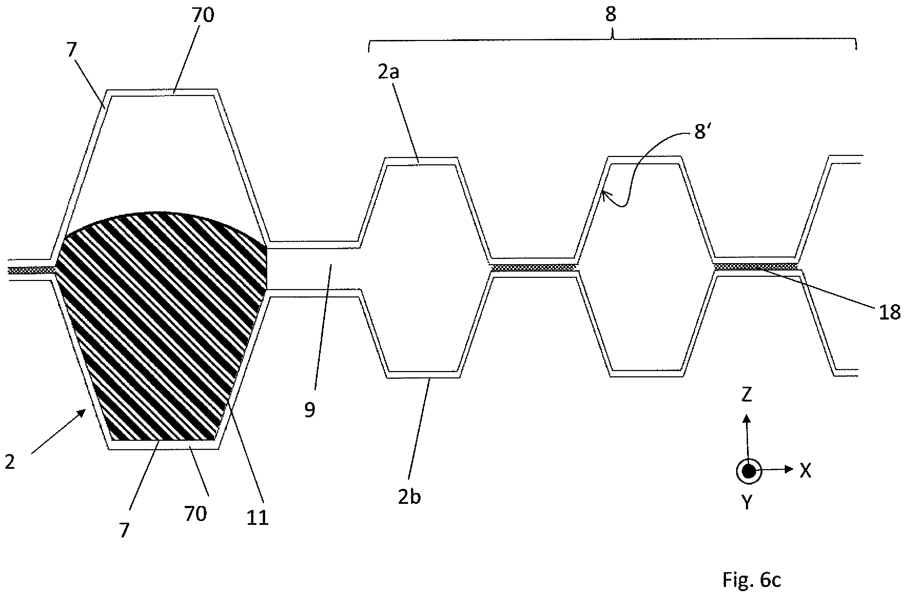

Figure 6c shows an example, where the filling 11 of the bead 7 is realized in such a manner that the full bead 7 of the layer 2b pointing downwards is essentially completely filled. As a consequence of the smaller density and the elasticity or flexibility of the filling material - see for instance the materials listed above -the resiliency of the bead 7 is only influence to a small degree.

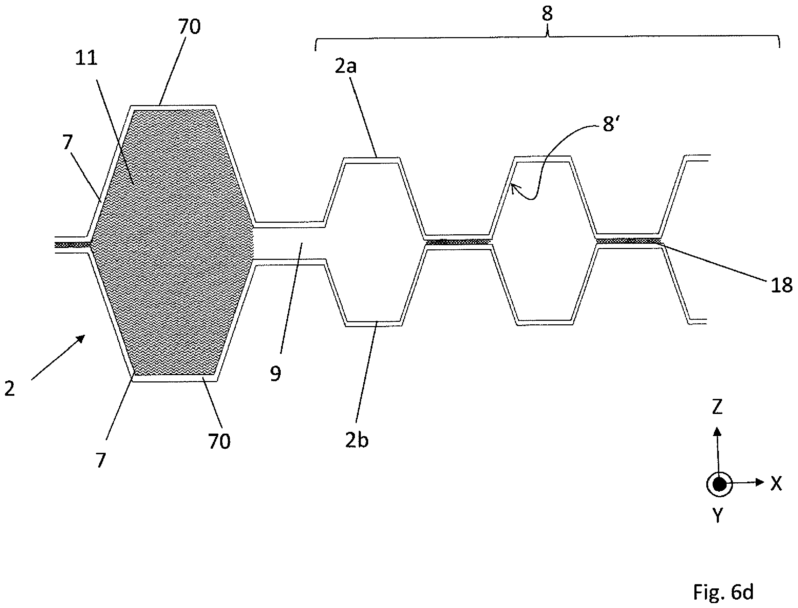

Figure 6d shows a completely filled inner chamber of a bead, which lends itself in particular with foamed fillings and soft fillings with high compressibility, respectively.

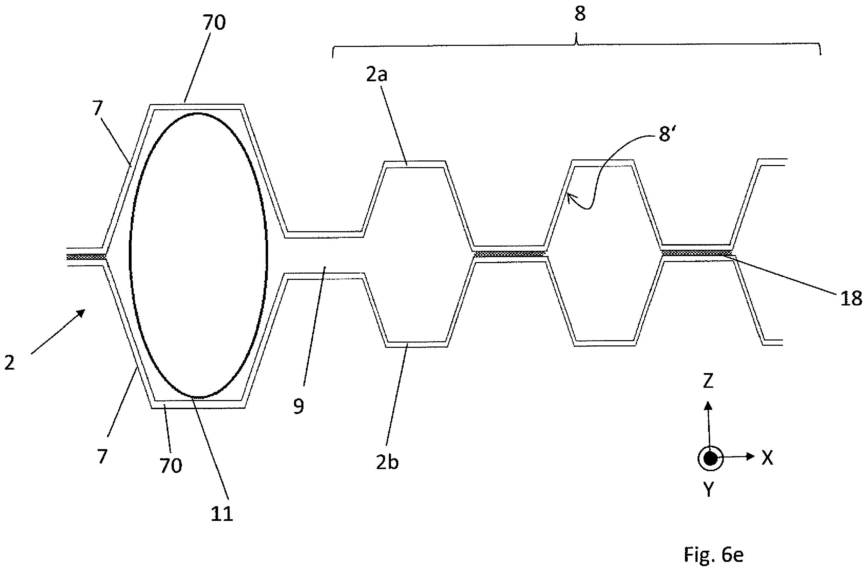

A corresponding solution is also shown in figure 6e, where the inner space of the bead is essentially completely filled, with the filling being an oval filling object, e.g. a catheter or a tube which is closed at least on the upstream direction of the coolant flow.

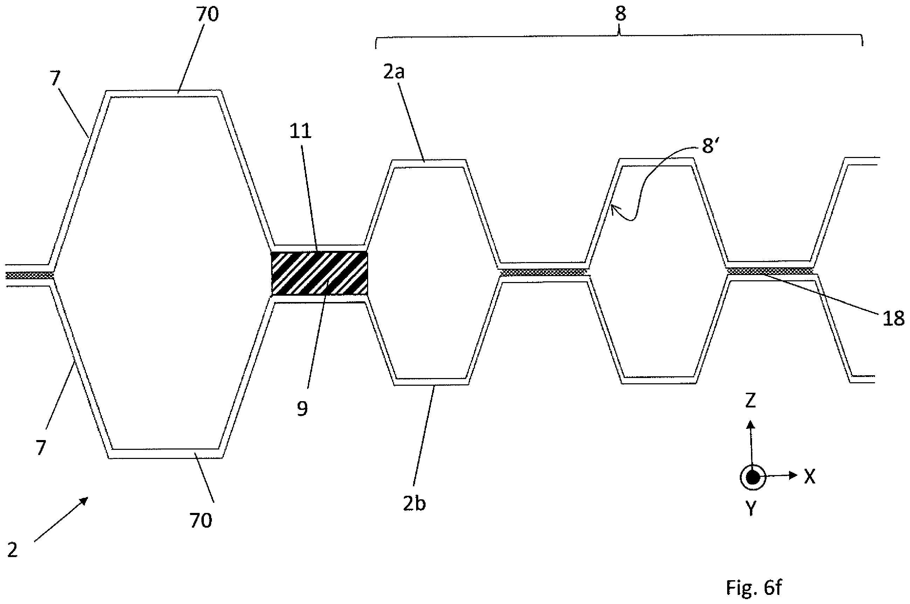

Figure 6f shows a further example, whether the structure 9 leading towards the bead 7 is essentially completely filled and this way blocks the flow towards the bead. With this, toot, the resiliency of the bead 7 is only slightly influenced.

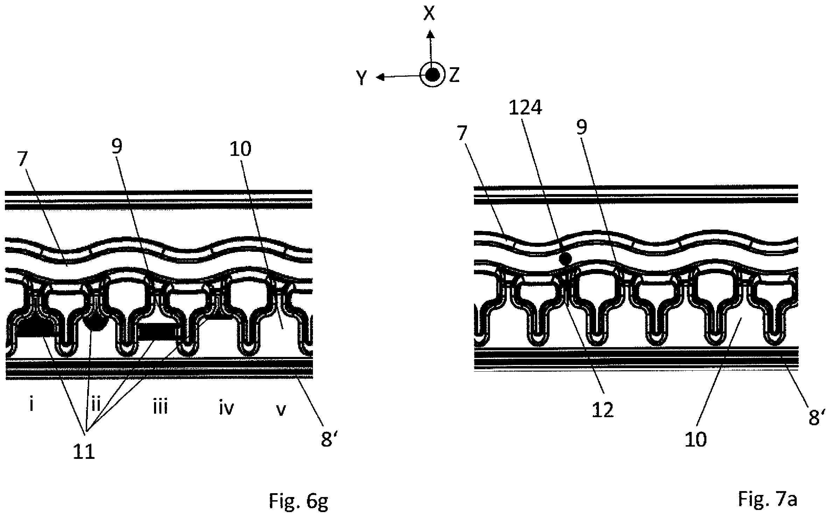

Figure 6g shows four different variants i to iv of closures and reductions of the cross section, respectively, where the forebay 10 - see also figures 5a and 5b - and/or the structure 9 leading directly towards the bead at least in sections are filled with a filling 11 according to the specifications above. This forebay in the same way as the connection 9 is arranged in the area between an electrochemically active area 8 and a bead 7 and this way inhibits or reduces, respectively, the flow from the area 8' to the hollow space of the bead 7. The variants i to iv illustrate possible filling patterns in a top view. As is indicated with variant iv and v in figure 6g, it here is not absolutely necessary to fill all forecourts 10 or connections 9, as even with the filling of a part of the forecourts 10 or connections 9, the flow resistance is increased to such a degree that the coolant is guided through the active area 8 on the preferred paths.

Figures 7a to 7d show examples of inserting elements, which can be used for a reduction or closure of the cross section of beads or of the structures leading towards beads. These inserting elements are preferably made from metal and/or plastics. It is possible to provide the inserting elements 124, in order to be able to position them easily and in a precise manner during the production. In figure 7a, one can see an example for this, where the connection between a bead 7 and the area 8' is delimited by such an inserting element 12 with undercut sections 124. Here, the linear section of the inserting element 12 on the one hand delimits the structure 9 guiding towards the bead, while the undercut section 124 delimits the flow through the bead 7.

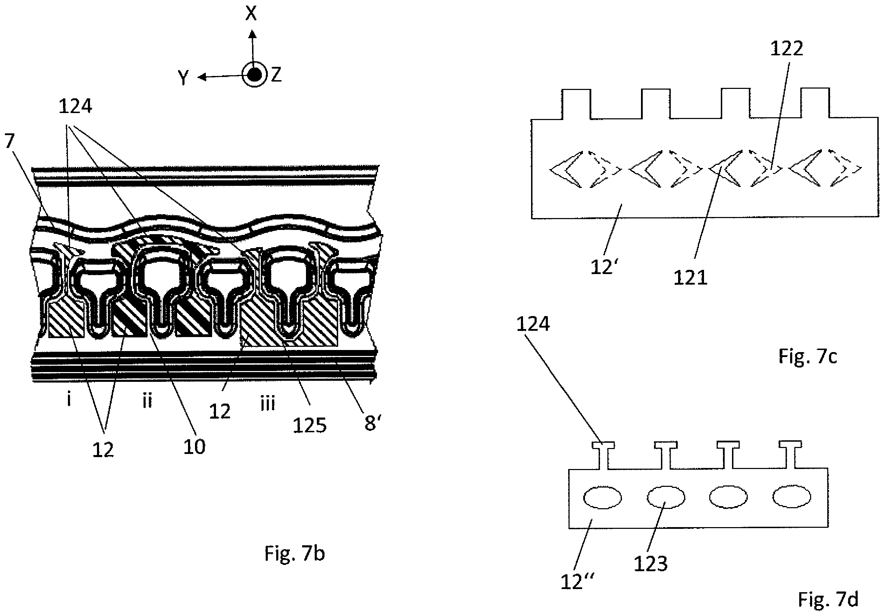

Figure 7b shows three variants i to iii of the inserting element 12, which in case of the variant i and iii are produced from metal sheet and in the case of the variant ii from a thermoplastic material. The variant i comprises an undercut section 124, but delimits only one structure 9 leading towards the bead, The variants ii and iii also comprise undercut sections 124, which in contrast to the variant i delimit several structures guiding towards the bead, namely in each case two. To this end, the undercut section 124 of the variant ii is designed as a connecting arch. Variant iii uses the edge section 124, 125 pointing towards the electrochemically active area 8 or its backside 8' as connecting area.

Alternative inserting elements 12' and 12", respectively, are shown in figures 7c and 7d. In figure 7c, an inserting element made from metal is shown which comprises embossments or indentations 121, 122, which cause a further increase of the profile of an inserting element 12' and this way to a better filling of the hollow space and therefore to a more pronounced reduction of the cross-section of the inner space of the bead in flow direction of the coolant. The indentations 121, 122 here are alternatingly pointing upward, thus towards the spectator, and downward, thus into the plane of drawing.

As an alternative, in figure 7d, an example is shown where an inserting element 12" is provided with dimples 123 from plastics, in order to increase the reduction of the cross-section of the inner space of the bead. These dimples can be provided on the upper as well as on the lower side of the inserting element 12". This inserting element 12" comprises undercut sections 124, too.

Figure 8 illustrates that a reduction of the cross section of a bead 7 can also be achieved by a deformation 13 of the landing 70 of the bead. The degree of the deformation 13 in this respect can also be much more pronounced as the one depicted. On the other hand, when designing the deformation 13, one has to take into account that the resiliency of the bead 7 compared to other areas without deformation should only be changed slightly. The deformation 13 of the landing of the bead offers a reduction of the cross-section of a bead 7, which is particularly easy to realize. It can also be designed non-symmetric, also with respect to the structure 9 leading towards the bead 7.

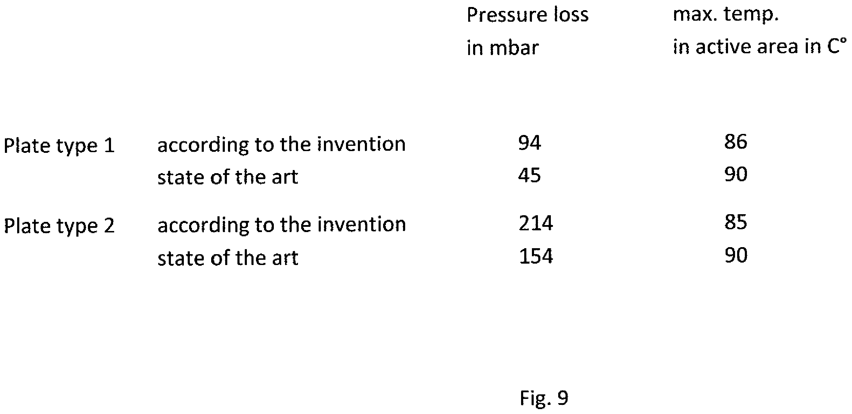

Finally, in figure 9, a table is shown in which two different types of plates on the one hand designs according to the state of the art and on the other hand designs according to the invention are compared to each other with respect to the pressure loss of the coolant guided through the electrochemical system 1 as well as with respect to the maximum temperature occurring in the electrochemically active area.

From this table, on can see that the reduction and/or closure of the cross-section is designed in such a way in the electrochemical system according to the invention, other than in an electrochemical system according to the state of the art, that with an outside temperature of 20°C and 1013,25 mbar pressure of the outside air, the maximum temperature of the system 1 in the area of the electrochemically active area 8 is lower by at least 3 %, preferably 5%, particularly preferably 8 % and/or the pressure loss for the guidance of the coolant through the system 1 is higher by 20 %, preferably 40 %, in particular 60 % higher than in a system which is identical except for the reduction and/or closure of the cross-section of the bead. The latter is particularly advantageous in electrochemical systems with a plurality of plates, as here the coolant distributes particularly well over the plates of the entire stack.

### List of reference numbers:

- 1: electrochemical System
- 2: separator plate
- 3: bead for the limitation of openings
- 4: opening for cooling
- 5: opening for supply and removal of hydrogen
- 6: opening for supply and removal of air or oxygen
- 7: bead for the limitation of an electrochemically active area
- 8: electrochemically active area
- 8': backside of the electrochemically active area
- 9: structure guiding towards the bead
- 10: forebay/forecourt
- 11: filling
- 12: inserting element
- 13: deformation of the roof of the bead
- 14: fuel cell
- 15: gas diffusion layer
- 16: limiting element
- 17: weldings
- 18: connection plane
- 30: passages in the bead
- 70: roof of the bead
- 121, 122: embossments of an inserting element
- 123: dimplings on an inserting element
- 124: undercut sections
- 125: connection section
- 140: polymer membrane
- 141, 142: catalyst layers
- K: coolant
- M1 bis M4: media

## Claims

1. Separator plate (2) comprising at least two metallic layers,
wherein the separator plate (2) comprises beads (3) for the limitation of openings for the supply and removal of coolant (4) into the interspace of the at least two layers of the separator plate (2) or for the supply and removal of reaction media (5, 6) to and from the cells,
wherein the separator plate (2) comprises a bead (7) for the limitation of an electrochemically active area (8),
wherein the bead (7) for the limitation of the electrochemically active area (8) surround the beads (3) for the limitation of the openings in sections towards the outer edge of the separator plate,
**characterised in that**
at least one delimiting element (16) for the guidance of media on an outer surface of the separator plate extends essentially transverse to the bead (7) for the limitation of the electrochemically active area (8) and essentially transverse to the outermost elements of the channel structure of the electrochemically active area (8);
wherein in order to reduce or block the flow of coolant in the inner space of the bead (7) for the limitation of the electrochemically active area (8), the bead (7) for the limitation of the electrochemically active area (8) itself and/or a structure (9) guiding towards the bead (7) for the limitation of the electrochemically active area (8) at least in sections comprises a reduction and/or closure of its cross section,
wherein the structures guiding towards the bead (7) for the limitation of the electrochemically active area (8) in the inner space of the separator plate are situated opposite to the at least one limiting element (16).

2. Separator plate according to claim 1, **characterized in that** the landing (70) of the bead (7) in at least one layer points towards the outside of the separator plate and the reductions and/or closures of the cross section are arranged in an interspace of the separator plate (2).

3. Separator plate according to one of the preceding claims, **characterized in that** the reduction of the cross section amounts to at least 30 %, preferably 60 %, particularly preferably 90 % of the adjoining non-reduced cross section.

4. Separator plate according to one of the preceding claims, **characterized in that** the reduction of the cross section extends essentially parallel and/or orthogonal to a main plane (18) of the separator plate (2).

5. Separator plate according to one of the preceding claims, **characterized in that** it comprises a transition area from a bead (7) to a structure (9) guiding towards the bead in the area joining the bead comprises a forebay/forecourt (10), with a reduction and/or closure of the cross section being given in the area of this forebay/forecourt.

6. Separator plate according to one of the preceding claims, **characterized in that** the reduction or the closure of the cross section is realized by a filling (11) and/or by a deformation (13) of a section of the separator plate (2).

7. Separator plate according to claim 6, **characterized in that** the filling (11) is realized plug-shaped, with one or several plugs being distributed over a separator plate (2).

8. Separator plate according to claim 6, **characterized in that** the filling (11) is realized as at least one inserting element (12).

9. Separator plate according to claim 6, **characterized in that** the filling (11) is realized by filling with a fluid sealant.

10. Separator plate according to claim 8, **characterized in that** the inserting element (12) is from metal and/or plastics.

11. Separator plate according to claim 10, **characterized in that** the inserting element (12) made from metal comprises fins turned up for the increase of the profile of the inserting element (12).

12. Separator plate according to claim 10, **characterized in that** the inserting element (12) in sections is tube- or catheter-shaped.

13. Separator plate according to claim 10, **characterized in that** the inserting element (12) comprises undercuts (124) for its positioning/locking in hollow areas of the separator plate.

14. Separator plate according to one of the preceding claims, **characterized in that** the separator plate (2) is realized with two metallic layers (2a, 2b), in particular from steel, in particular from stainless steel, e.g. with a coating in sections or on its entire surface.

15. Separator plate according to one of the preceding claims, **characterized in that** the openings of the separator plate for the supply and removal of coolant (4) into the interspace between the two layers (2a, 2b) of the separator plate (2) or the supply and removal of reaction media (5, 6) are provided with beads (3) which comprise passages (30) for the guidance of liquid or gaseous media in a hollow space of the separator plate (2) or to the electrochemically active area (8) on the outer surfaces of the separator plate.

16. Electrochemical system (1) consisting in a layering of several cells which each are separated from one another by separator plates (2) according to one of the preceding claims.

## Patentansprüche

1. Separatorplatte (2), die zumindest zwei metallische Schichten aufweist,
wobei die Separatorplatte (2) Sicken (3) für die Begrenzung von Öffnungen für die Zuführung und Abführung von Kühlmittel (4) in den Zwischenraum der zumindest zwei Schichten der Separatorplatte (2) oder für die Zuführung und Abführung von Reaktionsmedien (5, 6) zu und von den Zellen aufweist,
wobei die Separatorplatte (2) eine Sicke (7) für die Begrenzung eines elektrochemisch aktiven Bereichs (8) aufweist,
wobei die Sicke (7) für die Begrenzung des elektrochemisch aktiven Bereichs (8) die Sicken (3) für die Begrenzung der Öffnungen in Abschnitten zu der äußeren Kante der Separatorplatte hin umgibt,
**dadurch gekennzeichnet, dass**
zumindest ein begrenzendes Element (16) für die Führung von Medien auf einer äußeren Oberfläche der Separatorplatte sich im Wesentlichen quer zu der Sicke (7) für die Begrenzung des elektrochemisch aktiven Bereichs (8) und im Wesentlichen quer zu den äußersten Elementen der Kanalstruktur des elektrochemisch aktiven Bereichs (8) erstreckt;
wobei, um die Strömung von Kühlmitteln in dem inneren Raum der Sicke (7) für die Begrenzung des elektrochemisch aktiven Bereichs (8) zu verringern oder zu blockieren, die Sicke (7) für die Begrenzung des elektrochemisch aktiven Bereichs (8) selbst und/oder eine Struktur (9), die zu der Sicke (7) für die Begrenzung des elektrochemisch aktiven Bereichs (8) führt, zumindest in Abschnitten eine Verringerung und/oder einen Verschluss ihres Querschnitts aufweisen,
wobei die Strukturen, die zu der Sicke (7) für die Begrenzung des elektrochemisch aktiven Bereichs (8) in dem inneren Raum der Separatorplatte hin führen, gegenüber dem zumindest einen Begrenzungselement (16) angeordnet sind.

2. Separatorplatte nach Anspruch 1, **dadurch gekennzeichnet, dass** das Dach (70) der Sicke (7) in zumindest einer Schicht zu der Außenseite der Separatorplatte hin zeigt und die Verengungen und/oder Verschlüsse des Querschnitts in einem Zwischenraum der Separatorplatte (2) angeordnet sind.

3. Separatorplatte nach einem der vorhergehenden Ansprüche, **dadurch gekennzeichnet, dass** die Verengung des Querschnitts zumindest 30 %, bevorzugt 60 %, insbesondere bevorzugt 90 % des angrenzenden nicht-verengten Querschnitts beträgt.

4. Separatorplatte nach einem der vorhergehenden Ansprüche, **dadurch gekennzeichnet, dass** die Verengung des Querschnitts sich im Wesentlichen parallel und/oder orthogonal zu einer Hauptebene (18) der Separatorplatte (2) erstreckt.

5. Separatorplatte nach einem der vorhergehenden Ansprüche, **dadurch gekennzeichnet, dass** sie einen Übergangsbereich von einer Sicke (7) zu einer Struktur (9) aufweist, die zu der Sicke in dem mit der Sicke verbundenen Bereich hin führt, der ein Vorfeld / einen Vorhof (10) aufweist, mit einer/einem in dem Bereich dieses Vorfelds/Vorhofs gegebenen Verengung und/oder Verschluss des Querschnitts.

6. Separatorplatte nach einem der vorhergehenden Ansprüche, **dadurch gekennzeichnet, dass** die Verengung oder der Verschluss des Querschnitts durch eine Füllung (11) und/oder durch eine Verformung (13) eines Abschnitts der Separatorplatte (2) realisiert wird.

7. Separatorplatte nach Anspruch 6, **dadurch gekennzeichnet, dass** die Füllung (11) durch eine Stöpselform realisiert ist, wobei ein oder mehrere Stöpsel über eine Separatorplatte (2) verteilt sind.

8. Separatorplatte nach Anspruch 6, **dadurch gekennzeichnet, dass** die Füllung (11) als zumindest ein Einsatzelement (12) realisiert ist.

9. Separatorplatte nach Anspruch 6, **dadurch gekennzeichnet, dass** die Füllung (11) durch Füllen mit einem fluiden Abdichtmittel realisiert ist.

10. Separatorplatte nach Anspruch 8, **dadurch gekennzeichnet, dass** das Einsatzelement (12) aus Metall und/oder Kunststoff besteht.

11. Separatorplatte nach Anspruch 10, **dadurch gekennzeichnet, dass** das aus Metall bestehende Einsatzelement (12) aufwärts gebogene Rippen zur Vergrößerung des Profils des Einsatzelements (12) aufweist.

12. Separatorplatte nach Anspruch 10, **dadurch gekennzeichnet, dass** das Einsatzelement (12) in Abschnitten rohr- oder katheterförmig ist.

13. Separatorplatte nach Anspruch 10, **dadurch gekennzeichnet, dass** das Einsatzelement (12) Hinterschneidungen (124) für seine Positionierung/Verriegelung in hohlen Bereichen der Separatorplatte aufweist.

14. Separatorplatte nach einem der vorhergehenden Ansprüche, **dadurch gekennzeichnet, dass** die Separatorplatte (2) mit zwei metallischen Schichten (2a, 2b) insbesondere aus Stahl, insbesondere aus rostfreiem Stahl, beispielsweise mit einer Beschichtung in Abschnitten oder auf ihrer gesamten Oberfläche realisiert ist.

15. Separatorplatte nach einem der vorhergehenden Ansprüche, **dadurch gekennzeichnet, dass** die Öffnungen der Separatorplatte für die Zuführung und Abführung von Kühlmittel (4) in den Zwischenraum zwischen den zwei Schichten (2a, 2b) der Separatorplatte (2) oder die Zuführung und Abführung von Reaktionsmedien (5, 6) mit Sicken (3) versehen sind, die Durchgänge (30) für die Führung von flüssigen oder gasförmigen Medien in einem hohlen Raum der Separatorplatte (2) oder zu dem elektrochemisch aktiven Bereich (8) auf den äußeren Oberfläche der Separatorplatte aufweisen.

16. Elektrochemisches System (1), bestehend aus einer Schichtung von mehreren Zellen, die jeweils durch Separatorplatten (2) nach einem der vorhergehenden Ansprüche voneinander getrennt sind.

## Revendications

1. Plaque de séparation (2) comprenant au moins deux couches métalliques ; dans laquelle :
la plaque de séparation (2) comprend des nervures (3) pour la limitation d'ouvertures pour l'alimentation et l'enlèvement d'un agent de refroidissement (4) à l'intérieur de l'inter-espace des au moins deux couches de la plaque de séparation (2) ou pour l'alimentation et l'enlèvement d'un milieu de réaction (5, 6) sur les cellules et hors de celles-ci ; dans laquelle :
la plaque de séparation (2) comprend une nervure (7) pour la limitation d'une zone électro-chimiquement active (8) ; dans laquelle :
la nervure (7) pour la limitation de la zone électro-chimiquement active (8) entoure les nervures (3) pour la limitation des ouvertures dans des sections en direction du bord externe de la plaque de séparation ;
**caractérisée en ce que** :
au moins un élément de délimitation (16) pour le guidage du milieu sur une surface externe de la plaque de séparation s'étend essentiellement transversalement par rapport à la nervure (7) pour la limitation de la zone électro-chimiquement active (8) et essentiellement transversalement par rapport aux éléments les plus externes de la structure de canal/canaux de la zone électro-chimiquement active (8) ; dans laquelle :
afin de réduire ou de bloquer l'écoulement de l'agent de refroidissement dans l'espace interne de la nervure (7) pour la limitation de la zone électro-chimiquement active (8), la nervure (7) pour la limitation de la zone électro-chimiquement active (8) elle-même et/ou une structure (9) qui guide en direction de la nervure (7) pour la limitation de la zone électro-chimiquement active (8), au moins dans des sections, comprend une réduction et/ou une fermeture de sa section en coupe transversale; dans laquelle :
les structures qui guident en direction de la nervure (7) pour la limitation de la zone électro-chimiquement active (8) dans l'espace interne de la plaque de séparation sont situées à l'opposé de l'au moins un élément de limitation (16).

2. Plaque de séparation selon la revendication 1, **caractérisée en ce que** la partie de tête (70) de la nervure (7) dans au moins une couche pointe en direction de l'extérieur de la plaque de séparation et les réductions et/ou les fermetures de la section en coupe transversale sont agencées dans un inter-espace de la plaque de séparation (2).

3. Plaque de séparation selon l'une des revendications précédentes, **caractérisée en ce que** la réduction de la section en coupe transversale se monte jusqu'à au moins 30 %, de préférence 60 %, de façon particulièrement préférable 90 % de la section en coupe transversale non réduite contiguë.

4. Plaque de séparation selon l'une des revendications précédentes, **caractérisée en ce que** la réduction de la section en coupe transversale s'étend essentiellement parallèlement et/ou orthogonalement à un plan principal (18) de la plaque de séparation (2).

5. Plaque de séparation selon l'une des revendications précédentes, **caractérisée en ce qu'**elle comprend une zone de transition depuis une nervure (7) jusqu'à une structure (9) qui guide en direction de la nervure dans la zone qui rejoint la nervure, comprenant une partie d'arrivée/partie amont (10), une réduction et/ou une fermeture de la section en coupe transversale étant donnée dans la zone de cette partie d'arrivée/partie amont.

6. Plaque de séparation selon l'une des revendications précédentes, **caractérisée en ce que** la réduction ou la fermeture de la section en coupe transversale est réalisée au moyen d'un moyen de remplissage (11) et/ou au moyen d'une déformation (13) d'une section de la plaque de séparation (2).

7. Plaque de séparation selon la revendication 6, **caractérisée en ce que** le moyen de remplissage (11) est réalisé selon une forme de moyen d'obstruction, un ou plusieurs moyen(s) d'obstruction étant distribué(s) sur une plaque de séparation (2).

8. Plaque de séparation selon la revendication 6, **caractérisée en ce que** le moyen de remplissage (11) est réalisé en tant qu'au moins un élément d'insertion (12).

9. Plaque de séparation selon la revendication 6, **caractérisée en ce que** le moyen de remplissage (11) est réalisé en effectuant un remplissage à l'aide d'un agent d'étanchéité fluide.

10. Plaque de séparation selon la revendication 8, **caractérisée en ce que** l'élément d'insertion (12) est réalisé à partir d'un métal et/ou de matières plastiques.

11. Plaque de séparation selon la revendication 10, **caractérisée en ce que** l'élément d'insertion (12) qui est réalisé à partir d'un métal comprend des ailettes qui sont retournées pour l'augmentation du profil de l'élément d'insertion (12).

12. Plaque de séparation selon la revendication 10, **caractérisée en ce que** l'élément d'insertion (12), dans des sections, est en forme de tube ou de cathéter.

13. Plaque de séparation selon la revendication 10, **caractérisée en ce que** l'élément d'insertion (12) comprend des sections découpées (124) pour son positionnement/blocage dans des zones creuses de la plaque de séparation.

14. Plaque de séparation selon l'une des revendications précédentes, **caractérisée en ce que** la plaque de séparation (2) est réalisée à l'aide de deux couches métalliques (2a, 2b), en particulier à partir d'acier, en particulier à partir d'acier inoxydable, par exemple avec un revêtement dans des sections ou sur la totalité de sa surface.

15. Plaque de séparation selon l'une des revendications précédentes, **caractérisée en ce que** les ouvertures de la plaque de séparation pour l'alimentation et l'enlèvement de l'agent de refroidissement (4) à l'intérieur de l'inter-espace entre les deux couches (2a, 2b) de la plaque de séparation (2) ou pour l'alimentation et l'enlèvement du milieu de réaction (5, 6) sont munies de nervures (3) qui comprennent des passages (30) pour le guidage d'un liquide ou d'un milieux gazeux dans un espace creux de la plaque de séparation (2) ou jusqu'à la zone électro-chimiquement active (8) sur les surfaces externes de la plaque de séparation .

16. Système électrochimique (1) constitué par la disposition en couches de plusieurs cellules qui sont chacune séparées des autres par des plaques de séparation (2) selon l'une des revendications précédentes.
